# EUROPEAN PATENT APPLICATION

(11) **EP 2 003 816 A1**
(43) Date of publication of application: **17.12.2008**
(21) Application number: 07720627.4
(22) Date of filing: 30.03.2007
(51) Int. Cl.: H04L 12/26

(54) **A METHOD AND APPARATUS FOR CONTROLLING A PRESET EVENT**

(30) Priority: 03.04.2006 CN 200610066589
(71) Applicant: Huawei Technologies Co., Ltd., Longgang District, Shenzhen Guangdong 518129 (CN)
(72) Inventor: LIN, Yangbo, Guangdong 518129 (CN)
(74) Representative: Hengelhaupt, Jürgen
(86) International application number: PCT/CN2007/001053
(87) International publication number: WO 2007/112689

(57) **Abstract**

The present invention provides a method and apparatus for controlling preset events. The method includes: setting a preset event for a set object on a media gateway controller and a media gateway respectively; judging whether the preset event needs to be monitored continuously on the set object; if so, holding the preset event to be in the active state on the set object; otherwise, no longer holding the preset event to be in the active state on the set object. The apparatus includes a judging module, a controlling module and a canceling module. The present invention provides a complete and effective solution for controlling preset events, and enables the media gateway controller, the media gateway and the setter of the preset events such as an operation & maintenance (O&M) system to better collaborate on the preset events to meet different requirements of services.

## Description

This application claims priority to Chinese patent application No. 200610066589.0, entitled "Method and Apparatus for Controlling Preset Events" and filed on April 3, 2006, which are incorporated herein by reference in their entirety.

### Field of the Invention

The present invention relates to the communication field, and in particular, to a method and an apparatus for controlling preset events.

### Background of the Invention

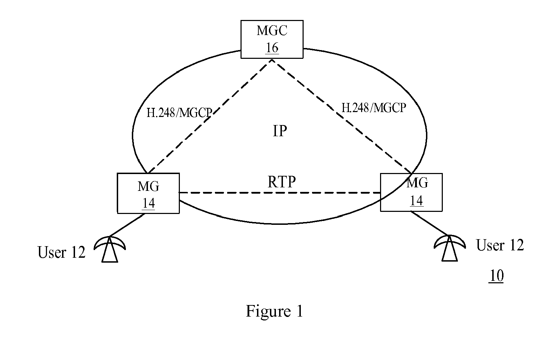

Figure 1 shows the networking of a media gateway (MG) and a media gateway controller (MGC) in a packet network based on the relevant technologies. As shown in Figure 1, the MGC 16 and the MG 14 are two key components in a packet network. The MGC 16 is responsible for the call control function, and the MG 14 is responsible for the service bearer function. In this way, the call control plane is separated from the service bearer plane; the network resources are sufficiently shared; equipment upgrade and service extension are simplified; and the development and maintenance costs are reduced drastically.

The (media) gateway control protocol is a main protocol for communication between the MG and the MGC. The currently prevalent protocols include H.284/Gateway Control Protocol (MeGaCo) and Media Gateway Control Protocol (MGCP). The MGCP V1 protocol was formulated by the Internet Engineering Task Force (IETF) in October 1999 and revised in January 2003; the H.284/MeGaCo V1 protocol was formulated by the IETF and the International Telecommunications Union (ITU) in November 2000 and revised in June 2003; the H.284 V2 protocol was formulated by the ITU in May 2002 and revised in March 2004; and the H.284 V3 protocol was released by the ITU in September 2005.

Taking H.284 as an example, various resources on the MG are abstractly represented by terminations. Terminations are categorized into physical terminations and ephemeral terminations. Physical terminations are physical entities which exist semi-permanently, for example, time division multiplex (TDM) channels; and ephemeral terminations represent the public resources which are requested and then released temporarily, for example, Real-time Transport Protocol (RTP) streams. Moreover, a root termination represents the entirety of the MG. The combinations of terminations are abstractly represented by contexts. A context may include multiple terminations, so topology is used to describe the interrelations between terminations. A termination not related to other terminations is contained by a special context called "null".

In the foregoing protocol-based abstract model, the call connection is actually an operation on the termination and the context. Such operations are performed through command requests and responses between the MGC and the MG. Command types include: add, modify, subtract, move, audit value, audit capability, notify, and service change. Command parameters, also known as descriptors, are categorized into property, signal, event, and statistic. The parameters with service relevance are logically aggregated into a package.

To monitor the change of states such as user off-hook, on-hook, dialing, hookflash, or network fault, quality alarm, and timeout, the H.284 protocol defines that the event is sent by the MGC to the MG to indicate the change of the states that need to be monitored, and defines the request ID and the parameters that may be required. The sent event is also known as a requested event. Once the MG monitors the change of such states, the MG reports the event to the MGC, carrying the foregoing request ID and the parameters that may be required. The reported event is also known as an observed event. The requested event and the observed event are correlated through the same request ID. The parameters attached to the requested event are independent of the parameters attached to the observed event. The subsequently sent event for a termination will replace the previously sent event completely.

In specific scenarios, it may be inappropriate for an MGC to send events to the MG. For example, when an MGC manages plenty of MGs concurrently, if the MGC sends an event to the MGs one by one, the performance of the MGC may be affected adversely; or, if an MG cannot operate services until the MGC sends an event, the MGC may fail abruptly and cannot send the event in time.

Therefore, to get adapted to the foregoing scenarios, the H.284 V3 introduces a mechanism of preset events. That is, before an event is sent by the MGC to the MG, a termination serving as a set object can be set on the MG to automatically start the monitoring on a certain state. Event presetting is based on a consensus between the MGC and the MG, including the same request ID and any possible parameters. In this way, the MGC will not make an incorrect response to the preset event reported by the MG. The event which is set for a termination serving as a set object on the MG before being sent by the MGC to the MG is called a preset event.

Nevertheless, the prior art does not define who will set and cancel a preset event, and how to handle a preset event. In other words, the existing gateway control protocols such as H.284 lack a complete and effective mechanism for controlling preset events.

### Summary of the Invention

The present invention provides a method and an apparatus for controlling preset events to solve problems in the prior art such as who will set and cancel a preset event and how to handle a preset event.

A method for controlling preset events includes:
setting a preset event for a set object on an MGC and an MG respectively; and
judging whether the preset event needs to be monitored continuously on the set object; if so, holding the preset event to be in the active state on the set object; otherwise, no longer holding the preset event to be in the active state on the set object.

An apparatus for controlling preset events includes:
a judging module, adapted to judge whether a preset event needs to be monitored continuously on a set object;
a controlling module, adapted to hold the preset event to be in the active state on the set object when the judging module determines that the preset event needs to be monitored continuously on the set object; and
a canceling module, adapted to no longer hold the preset event to be in the active state on the set object when the judging module determines that the preset event no longer needs to be monitored continuously on the set object.

Through the foregoing technical solution, the present invention provides a complete and effective solution for controlling preset events, and enables the MGC, the MG and the setter of the preset events such as an operation & maintenance (O&M) system to better collaborate on the preset events to meet different requirements of services.
Other features and merits of the present invention will be described in the subsequent specifications and partially become evident from the specifications or understood through implementation of the present invention. The purposes and other merits of the present invention can be fulfilled and accomplished through the structures specified in the specifications, claims and accompanying drawings.

### Brief Description of the Drawings

Figure 1 shows the networking of an MG and an MGC in a packet network in the prior art;

Figure 2 is a flowchart of the method for controlling preset events according to the principles of the present invention;

Figure 3 is a block diagram of the apparatus for controlling preset events according to the principles of the present invention;

Figure 4 is a flowchart according to a first embodiment of the present invention;

Figure 5 is a flowchart according to a second embodiment of the present invention; and

Figure 6 is a flowchart according to a third embodiment of the present invention.

### Detailed Description of the Embodiments

The present invention is hereinafter described in detail with reference to accompanying drawings.

Generally, an O&M system performs event presetting, for example, console operations or NMS operations. The O&M system sets the same preset event on an MGC and an MG concurrently according to the service requirements, including the same request ID and any possible parameters. In this way, the MGC will not make an incorrect response to the preset event reported by the MG.

A preset event may be set for the whole MG or a certain resource on the MG. A preset event may be set anytime in the lifecycle of a set object. The preset event is activated simultaneously when the set object is activated. For example, the preset event set on a root termination starts being monitored when the whole MG starts normal operation; and the event set on a termination starts being monitored when the termination is created on the MG.

Varying with whether there is a need of being monitored continuously, preset events are categorized into two types: preset event that requires continuous monitoring, and preset event that requires no continuous monitoring.

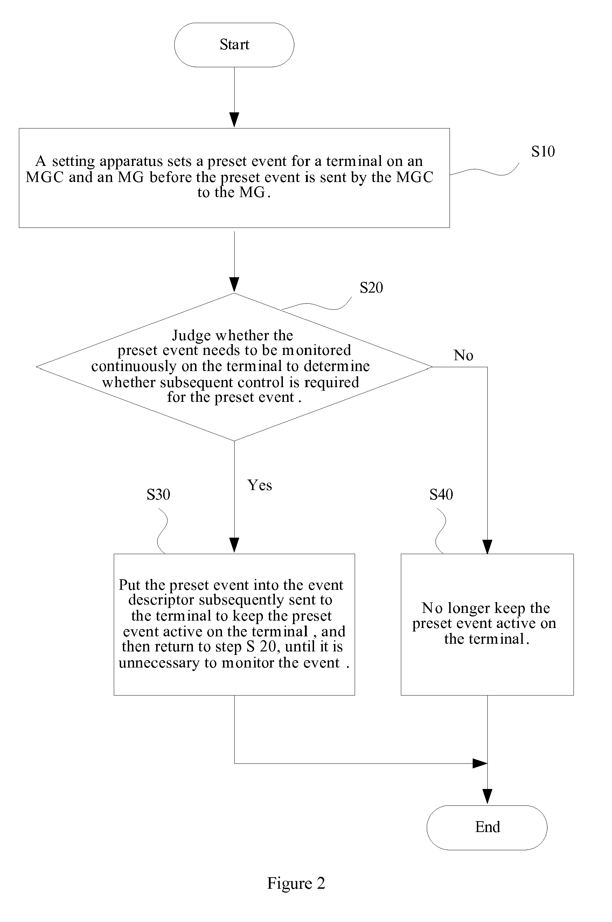

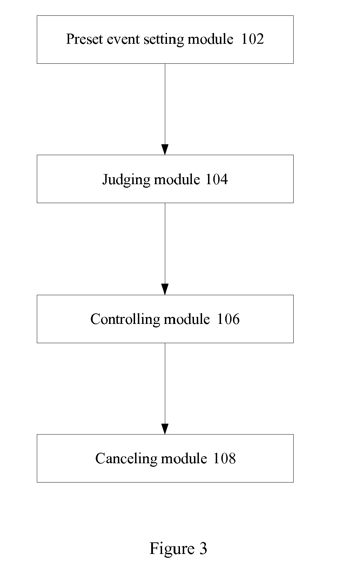

The present invention is designed according to the foregoing analysis. The principles of the present invention are hereinafter described in detail with reference to Figure 2 and Figure 3.

Figure 2 is a flowchart of the method for controlling preset events based on the principles of the present invention.

As shown in Figure 2, the method for controlling preset events based on the principles of the present invention includes the following steps:

Step S10: A setting apparatus sets a preset event for a termination on an MGC and an MG respectively;

Step S20: Judging whether the preset event needs to be monitored continuously on the termination;

Step S30: If the preset event needs to be monitored, holding the preset event to be active continuously on the termination and then returning to step S20 until it is unnecessary to monitor the preset event; and

Step S40: If it is unnecessary to monitor the preset event, no longer holding the preset event to be active on the termination.

Figure 3 is a block diagram of the apparatus for controlling preset events based on the principles of the present invention.

As shown in Figure 3, the apparatus 100 for controlling preset events based on the principles of the present invention includes:
a preset event setting module 102, adapted to set a preset event for a termination on an MGC and an MG respectively;
a judging module 104, adapted to judge whether the preset event needs to be monitored continuously on the termination;
a controlling module 106, adapted to, if the judging module determines it is necessary to monitor the preset event, hold the preset event to be active continuously on the termination and then return to the judging module until the judging module determines it is unnecessary to monitor the preset event; and
a canceling module 108, adapted to no longer hold the preset event to be active on the termination if the judging module determines it is unnecessary to monitor the preset event.

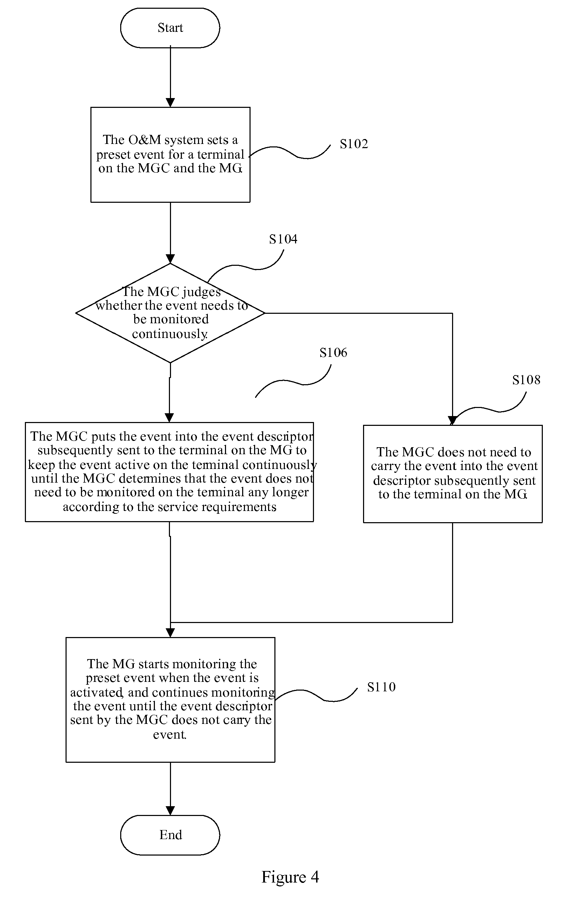

Figure 4 is a flowchart according to the first embodiment of the present invention.

In the first embodiment, the MGC exercises control. That is, the O&M system only sets a preset event for a termination on the MGC and the MG, and the MGC determines whether the event needs to be monitored continuously on the termination according to the service requirements. If so, the MGC carries the event into the event descriptor subsequently sent to the termination on the MG, so as to keep the event active on the termination until the MGC determines that the event does not need to be monitored continuously on the termination according to the service requirements. Otherwise, the MGC does not need to carry the event into the event descriptor subsequently sent to the termination on the MG. The MG starts monitoring the preset event when the event is activated, and continues monitoring the event until the event descriptor sent by the MGC does not carry the event.

Specifically, as shown in Figure 4, the first embodiment includes the following steps:

The embodiment begins;

Step S102: The O&M system sets a preset event for a termination on the MGC and the MG;

Step S104: According to the service requirements, the MGC determines whether the event needs to be monitored continuously on the termination; if so, the procedure goes to step S106; otherwise, the procedure goes to step S108;

Step S106: The MGC carries the event into the event descriptor subsequently sent to the termination on the MG to keep the event active on the termination continuously until the MGC determines that the event does not need to be monitored continuously on the termination any longer according to the service requirements, and then the procedure goes to step S110;

Step S108: The MGC does not need to carry the event into the event descriptor subsequently sent to the termination on the MG, and then the procedure goes to step S110; and

S110: The MG starts monitoring the preset event when the event is activated, and continues monitoring the event until the event descriptor sent by the MGC does not carry the event;

Then the embodiment ends.

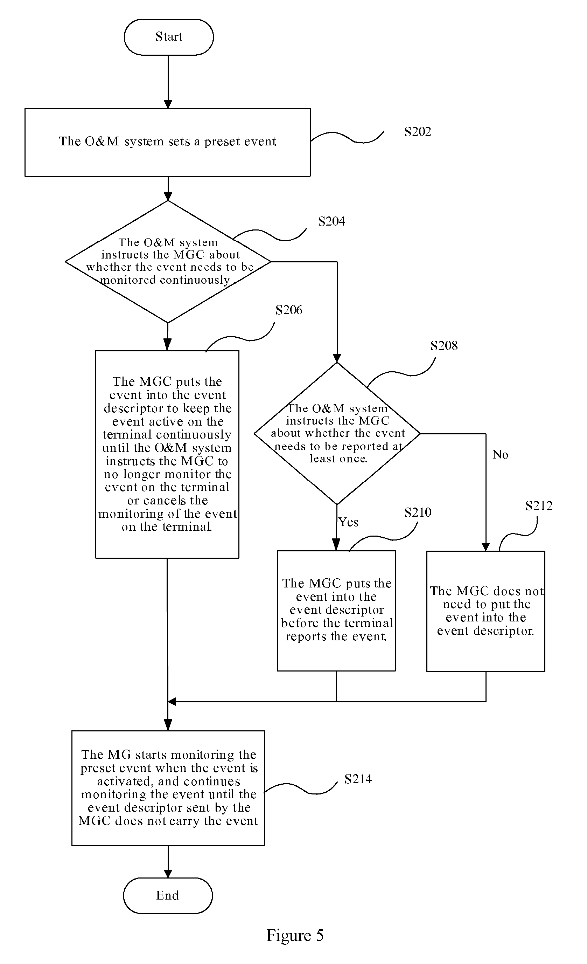

Figure 5 is a flowchart according to a second embodiment of the present invention.

In the second embodiment, the MGC exercises control under an instruction of the O&M system. That is, while setting a preset event for a termination on the MGC and the MG, the O&M system instructs the MGC about whether the event needs to be continuously monitored. If the event needs to be monitored continuously, the MGC carries the event into the event descriptor subsequently sent to the termination on the MG to keep the event active on the termination continuously until the O&M system instructs the MGC to no longer monitor the event on the termination or cancels the monitoring of the event on the termination. If the event does not need to be monitored continuously, the O&M system further instructs the MGC about whether the event needs to be reported on the termination at least once on the termination. If the event needs to be reported at least once on the termination, the MGC carries the event into the event descriptor subsequently sent to the termination on the MG; if the event does not need to be reported, the MGC does not need to put the event into the event descriptor. The MG starts monitoring the preset event when the event is activated, and continues monitoring the event until the event descriptor sent by the MGC does not carry the event.

Specifically, as shown in Figure 5, the second embodiment includes the following steps:

The embodiment begins;

S202: The O&M system sets a preset event for a termination on the MGC and the MG;

Step S204: The O&M system instructs the MGC about whether the event needs to be monitored continuously on the termination; if so, the procedure goes to step S206; otherwise the procedure goes to step S208;

Step S206: The MGC carries the event into the event descriptor subsequently sent to the termination on the MG to keep the event active on the termination continuously until the O&M system instructs the MGC to no longer monitor the event on the termination or cancels the monitoring of the event on the termination, and then the procedure goes to step S212;

Step S208: The O&M system further instructs the MGC about whether the event needs to be reported at least once on the termination;

Step S210: If the event needs to be reported at least once, the MGC needs to put the event into the event descriptor subsequently sent to the termination on the MG; if the event does not need to be reported (S214), the procedure goes to step S212; and

S212: The MG starts monitoring the preset event when the event is activated, and continues monitoring the event until the event descriptor sent by the MGC does not carry the event.

Then the embodiment ends.

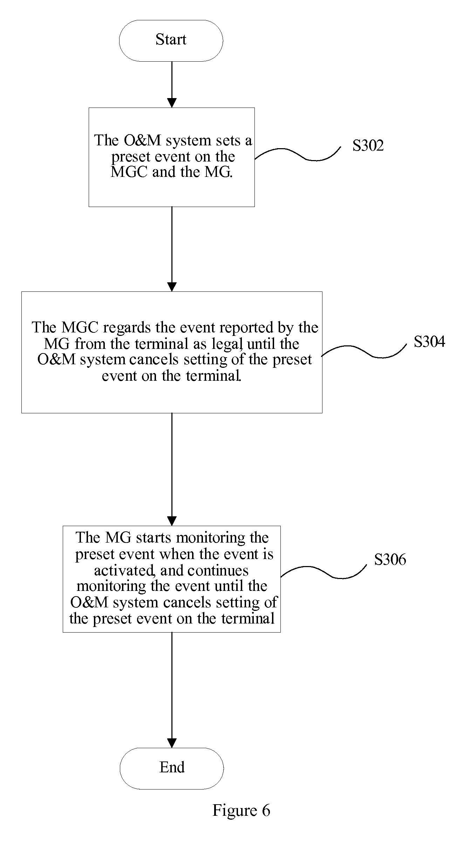

Figure 6 is a flowchart according to the third embodiment of the present invention.

In the third embodiment, the O&M system exercises control. That is, after the O&M system sets a preset event for a termination on the MGC and the MG, the MGC regards the event reported by the MG from the termination as legal, until the O&M system cancels setting of the preset event on the termination. The MG starts monitoring the preset event when the event is activated, and continues monitoring the event until the O&M system cancels setting of the preset event on the termination.

Specifically, as shown in Figure 6, the method in the first technical solution includes the following steps:

The embodiment begins;

S302: The O&M system sets a preset event for a termination on the MGC and the MG;

S304: The MGC regards the event reported by the MG from the termination as legal until the O&M system cancels setting of the preset event on the termination;

Step S306: The MG starts monitoring the preset event when the event is activated, and continues monitoring the event until the O&M system cancels setting of the preset event on the termination.

Then the embodiment ends.

It is understandable to those skilled in the art that, in the above three embodiments of the present invention, the set object of the preset event may be the whole MG or a resource in the MG; the preset event may be set anytime in the lifecycle of the set object; and the preset event may be activated when the set object is activated.

The embodiments of the present invention are hereinafter described in detail.

Supposing that the MG is used to monitor the Inactivity Timeout event of the MGC state and the MG is used to monitor the Off Hook event of the user operation, the foregoing solution is described below:

As regards the Inactivity Timeout event that needs continuous monitoring on the MG (root termination):

According to the first embodiment, the O&M system presets the event for the root termination on the MGC and the MG. The MG starts monitoring the event after it is registered on the MGC successfully and can operate normally. The MGC determines that the event needs to be monitored continuously on the root termination according to the service requirements. Therefore, the event is carried in the event descriptor subsequently sent to the root termination on the MG.

According to the second embodiment, the O&M system presets the event for the root termination on the MGC and the MG. Meanwhile, the O&M system instructs the MGC about whether the event needs to be monitored continuously on the root termination according to the service requirements. Therefore, the MG starts monitoring the event after the MG is registered successfully on the MGC and can operate normally, and the MGC puts the event into the event descriptor subsequently sent to the root termination on the MG.

According to the third embodiment, the O&M system presets the event for the root termination on the MGC and the MG. The MG starts monitoring the event after it is registered on the MGC successfully and can operate normally. The MGC regards the event reported by the MG from the root termination as legal.

As regards the Off Hook event that needs no continuous monitoring on a physical termination:

According to the first embodiment, the O&M system presets the event for a physical termination on the MGC and the MG, and the MG starts monitoring the event after the termination is activated (entering the service state). If the MGC needs to send an event descriptor to the termination before the termination detects user off-hook and reports the off-hook, the MGC determines that the event still needs to be monitored on the termination according to the service requirements, and carries the event into the event descriptor sent to the termination; if the termination detects user off-hook and reports the off-hook, the MGC determines that the event does not need to be monitored on the termination any longer according to the service requirements, and does not put the event into the event descriptor subsequently sent to the termination, until the service requires monitoring of the event on the termination again, for example, when the termination detects user on-hook and reports the on-hook.

According to the second embodiment, the O&M system presets the event for a physical termination on the MGC and MG. Meanwhile, the O&M system instructs the MGC to report the event on the termination at least once according to the service requirements. Therefore, the MG starts monitoring the event after the termination is activated (entering the service state). The MGC needs to put the event into the event descriptor subsequently sent to the termination before the termination detects user off-hook and reports the off-hook. If the termination detects user off-hook and reports the off-hook, the MGC does not need to put the event into the event descriptor subsequently sent to the termination any longer, until the service requires monitoring of the event on the termination again, for example, when the termination detects user on-hook and reports the on-hook.

According to the third embodiment, the O&M system presets the event for a physical termination on the MGC and the MG. The MG starts monitoring the event after the termination is activated (entering the service state). The MGC regards the event reported by the MG from the termination as legal, until the O&M system cancels setting of the preset event on the termination.

In conclusion, the present invention provides the following benefits:

The present invention provides a complete and effective solution for controlling present events, and enables the MGC, the MG and the O&M system to better collaborate on the preset events to meet different requirements of services.

Although the invention has been described through some preferred embodiments, the invention is not limited to such embodiments. It is apparent that those skilled in the art can make various modifications and variations to the invention without departing from the spirit and scope of the invention. The invention is intended to cover the modifications and variations provided that they fall in the scope of protection defined by the claims or their equivalents.

## Claims

1. A method for controlling preset events, comprising:
setting a preset event for a set object on an MGC and an MG respectively; and
judging whether the preset event needs to be monitored continuously on the set object; if so, holding the preset event to be in the active state on the set object; otherwise, no longer holding the preset event to be in the active state on the set object.

2. The method according to claim 1, wherein the setting a preset event for a set object on an MGC and an MG respectively comprises:
setting the same preset event and the same parameter(s) for the set object on the MGC and the MG respectively.

3. The method according to claim 1, wherein the set object comprises:
the whole MG or a certain resource on the MG.

4. The method according to claim 3, wherein the setting a preset event for a set object on an MGC and an MG respectively comprises:
setting the preset event for the root termination of the MG if the set object is the whole MG; or
setting the preset event for a physical or an ephemeral termination if the set object is the resource on the MG.

5. The method according to claim 1, wherein the setting a preset event for a set object on an MGC and an MG respectively comprises:
setting the preset event anytime in the lifecycle of the set object.

6. The method according to claim 1, wherein the setting a preset event for a set object on an MGC and an MG respectively comprises:
setting, by an operation and maintenance (O&M) system, a preset event for a set object on an MGC and an MG respectively.

7. The method according to any one of claims 1 to 6, wherein the judging whether the preset event needs to be monitored continuously on the set object comprises:
judging, by the MGC, whether the preset event needs to be monitored continuously on the set object; or,
judging, by an apparatus, whether the preset event needs to be monitored continuously on the set object, and setting the preset event indicating the result of the judging for the MGC.

8. The method according to claim 7, comprising:
carrying, by the MGC, the event into a event descriptor subsequently sent to the set object to hold the preset event to be in the active state on the set object if the result of the judging is true; or,
carrying, the MGC, the event into an event descriptor subsequently sent to the set object or the apparatus setting the preset event cancelling the preset event for the set object to not hold the preset event to be in the active state on the set object if the result of the judging is false.

9. The method according to any one of claims 1 to 6, comprising:
starting monitoring, by the MG, the preset event when the event is activated, and monitoring the preset event until the apparatus setting the preset event cancels setting of the preset event for the set object;
regarding, by the MGC, the event reported by the MG from the set object as legal, until the apparatus setting the preset event cancels setting of the preset event on the set object.

10. The method according to any one of claims 1 to 6, comprising:
setting, by the apparatus, the preset event, or holding, by the MGC, the preset event for the set object active before the set object reports the preset event once, if the apparatus setting the preset event or the MGC determines the preset event for the set object need to be reported at least once.

11. An apparatus for controlling preset events comprising:
a judging module, adapted to judge whether a preset event needs to be monitored continuously on a set object;
a controlling module, adapted to hold the preset event to be in the active state on the set object when the judging module determines that the preset event needs to be monitored continuously on the set object; and
a canceling module, adapted to no longer hold the preset event to be in the active state on the set object when the judging module determines that the preset event no longer needs to be monitored continuously on the set object.

12. The apparatus according to claim 11, comprising:
a preset event setting module, adapted to enable an apparatus setting the preset event to set the preset event for the set object on an MGC and an MG.
